# FASCICULE DE BREVET EUROPEEN

(11) **EP 2 964 400 B1**
(45) Date de publication et mention de la délivrance du brevet: **05.09.2018**
(21) Numéro de dépôt: 14715047.8
(22) Date de dépôt: 10.03.2014
(51) Int. Cl.: B08B 3/02, B09B 3/00

(54) **DISPOSITIF ET PROCEDE DE DECONTAMINATION DE SURFACES COMPORTANT UN OU PLUSIEURS PRODUITS TOXIQUES**
VORRICHTUNG UND VERFAHREN ZUR DEKONTAMINIERUNG VON OBERFLÄCHEN MIT EINEM ODER MEHREREN GIFTSTOFFEN
DEVICE AND METHOD FOR DECONTAMINATING SURFACES COMPRISING ONE OR A PLURALITY OF TOXIC PRODUCTS

(30) Priorité: 08.03.2013 FR 1352127; 04.10.2013 FR 1359638
(43) Date de publication de la demande: 13.01.2016
(73) Titulaire: Peri-Bat, 21490 Norges-La-Ville (FR)
(72) Inventeur: BONNEAU, Jean-Pierre, F-21440 Vaux Saules (FR); BONNEAU, Cédric, F-21240 Talant (FR); BONNEAU, Michaël, F-21440 Poncey Sur L'ignon (FR); BONNEAU, Vincent, F-21120 Chaignay (FR)
(74) Mandataire: Cabinet Laurent & Charras
(86) Numéro de dépôt international: PCT/FR2014/050543
(87) Numéro de publication internationale: WO 2014/135819

(56) Documents cités:
- WO-A1-89/04729
- WO-A1-91/04805
- FR-A1- 2 741 287
- FR-A1- 2 815 276
- US-A- 4 897 121

## Description

### DOMAINE TECHNIQUE

La présente invention concerne un dispositif de décontamination de surfaces par hydrodécapage permettant un retrait de produits toxiques, et plus particulièrement de l'amiante et du plomb, avec une émission quasi nulle de particules contaminées dans l'atmosphère afin d'assurer la sécurité des ouvriers, de réduire la pénibilité du travail des ouvriers et de protéger l'environnement direct, c'est-à-dire la zone de décontamination délimitant le chantier, et l'environnement indirect, c'est-à-dire l'environnement autour du chantier de décontamination.

### ART ANTERIEUR

L'amiante est connue depuis plus de deux mille ans et elle a longtemps été employée dans de nombreux matériaux et produits, en raison de ses propriétés d'isolation acoustique, thermique, de résistance à la chaleur et au feu, de son inertie chimique, de sa résistance mécanique et de son imputrescibilité. Toutefois, les caractéristiques physico-chimiques de l'amiante, associées à une capacité à se fractionner en fibres fourchues microscopiques pour atteindre les alvéoles pulmonaires, et même migrer jusqu'à la plèvre, font que l'inhalation importante de fibres d'amiante est dangereuse. La réglementation fixe qu'un travailleur ne doit pas inhaler plus de 0,1 fibres par cm³ sur une heure. Les pathologies, essentiellement des cancers du poumon, peuvent se déclarer jusqu'à plus de cinquante ans après les premières expositions aux fibres d'amiante. Les effets néfastes sur la santé humaine ont donc conduit à un contrôle puis à une réduction progressive de son utilisation, suivie d'une interdiction totale depuis le 1^{er} janvier 1997, par le décret n° 96-1133 du 24 décembre 1996 relatif à l'interdiction de l'amiante, pris en application du code du travail et du code de la consommation.

Actuellement, les opérations de désamiantage se déroulent en plusieurs étapes contraignantes, car elles doivent respecter des normes de sécurité à la fois pour l'ouvrier et pour l'environnement. L'ouvrier doit en effet être muni d'une combinaison et d'un système respiratoire afin de ne pas inhaler de poussières d'amiante friables, extrêmement toxiques. Son travail est réalisé dans une zone confinée avec accès à ladite zone confinée par un sas, divisé en plusieurs compartiments dont deux douches. Cette zone confinée présente une pression d'air inférieure à celle de l'air extérieur de manière à ce qu'en cas de fuite, ce soit l'air extérieur qui entre dans la zone confinée, et non l'inverse. Cette zone confinée est réalisée au moyen de deux films de polyane qui protègent les surfaces à ne pas désamianter. Un système de renouvellement de l'air doit également être prévu.

Toutefois, il est fréquent que la combinaison et/ou le système respiratoire deviennent inopérants au cours du chantier, en raison d'une déchirure de la combinaison ou d'un dysfonctionnement du système respiratoire par exemple de sorte qu'il est fréquent que les ouvriers respirent plus de 0,1 fibres par cm³ sur une heure s'exposant à des maladies mortelles. De plus, malgré toutes les précautions prises lors du confinement, ledit confinement nécessitant beaucoup de temps pour sa mise en place ainsi que des vérifications obligatoires qui grèvent considérablement le coût des chantiers de désamiantage, des fibres d'amiante peuvent s'échapper de la zone confinement mettant ainsi la mise en danger des personnes extérieures au chantier qui sont susceptibles de respirer, sans le savoir, des fibres d'amiante.

L'amiante ainsi enlevée de son support peut subir un traitement permettant de le rendre inerte, c'est-à-dire le modifier pour le rendre non toxique pour l'homme. Ce traitement peut consister en une vitrification, telle que décrite dans les brevets FR 2 853 846 ou FR 2 690 093, les déchets amiantes étant incorporés dans un four particulier permettant d'atteindre des températures très élevées. Les déchets peuvent être auparavant conditionnés, par exemple par un ensachage préalable, tel que décrit dans le brevet FR 2 746 037.

Cependant, c'est lors de l'enlèvement de l'amiante de son support que les risques d'inhalation sont les plus importants. A cet égard, il est usuel d'utiliser des grattoirs et/ou des ponceuses pour détacher l'amiante de son support, ce qui produit une grande quantité de poussière d'amiante qui peut se disperser dans l'air ambiant. Les méthodes courantes d'enlèvement de l'amiante nécessitent des conditions de sécurité draconiennes sans pour autant détoxifier le produit.

De nombreuses solutions alternatives ont été trouvées afin de permettre en une seule étape l'enlèvement des déchets tout en les rendant inertes. C'est le cas notamment du brevet US 4 693 755 décrit un procédé permettant de retirer l'amiante de son support suite à l'application d'une composition à base de polymère cellulosique qui pénètre et sèche la poussière d'amiante de manière à la rendre inerte.

Toutefois, ce type de procédé n'est plus mis en oeuvre compte tenu du risque chimique qu'il fait encourir aux ouvriers et à l'environnement.

On connait également le brevet FR 2 875 720 qui décrit quant à lui un procédé de désamiantage utilisant le froid. Suite à l'injection d'azote liquide, à une température comprise entre -40°C et -196°C, l'amiante se fige dans son support et peut être enlevé en toute sécurité.

Outre le coût élevé de l'azote liquide, ce type de procédé nécessite une étape de traitement supplémentaire des fibres d'amiante qui grève le coût des chantiers.

On connait également le document FR 2 815 276 qui décrit un dispositif de désamiantage de surfaces comprenant un appareil de projection d'un jet de liquide à haute pression, ladite pression étant comprise entre 1000 et 2000 bars, à une distance d'environ un mètre de la surface à traiter, des moyens de pompage séparés pour aspirer les résidus chargés en humidité issus de la dégradation du revêtement tombé sur le sol, un système de filtration constitué d'une presse filtreuse et, éventuellement, un second système de filtration.

Le document WO 89/04729 décrit également une installation pour le traitement de l'amiante. Cette installation comprend une tête d'hydrodécapage reliée à un système d'aspiration et une source haute pression. La boue récupérée est transférée dans des cyclones par le biais d'une forte aspiration située à l'extrémité de l'installation. Cependant, cette installation nécessite une aspiration très puissance pour capter et traiter la boue.

Tous ces procédés et dispositifs mettant en oeuvre ces procédés présentent l'inconvénient, outre d'être onéreux, de produire une quantité de poussières d'amiante trop élevée de sorte que le risque pour les ouvriers et l'environnement reste trop important. De plus, le décret n°2012-639 impose que, à compter du 1er juillet 2015, la concentration moyenne en fibres d'amiante, sur huit heures de travail, ne dépasse pas dix fibres par litre. Par conséquent, c'est une division par dix, du taux précédemment autorisé et qui plaçait la limite à 100 fibres par litre. Trois catégories de classification sont alors mises en place. Au « premier niveau », l'empoussièrement est inférieur à la valeur limite d'exposition professionnelle dite VLP. Au « deuxième niveau » la valeur est supérieure ou égale à la VLP et inférieure à 60 fois la VLP. Enfin au « troisième niveau » la valeur est supérieure ou égale à 60 fois la VLP et inférieure à 250 fois la VLP. Ainsi, cette diminution de la valeur limite d'exposition professionnelle (VLP) aura comme conséquence immédiate une augmentation du coût de réalisation du désamiantage avec les procédés de désamiantage de l'art antérieur.

Par ailleurs, dans les bâtiments, il existe d'autres produits susceptibles de constituer un risque pour la santé et qui doivent être retirés en toute sécurité pour préserver la santé des ouvriers lors de la déconstruction notamment. C'est le cas notamment du plomb susceptible de causer du saturnisme et présent dans de nombreux revêtements de surface comme les peintures anciennes notamment, les PCB (biphényles polychlorés) qui sont des produits chimiques similaires à la dioxine et que l'on trouve dans les joints de dilatation ainsi que dans certains revêtements, les hydrocarbures polycycliques aromatiques (HAP) qui sont des polluants organiques persistants et qui sont présents dans les produits fabriqués à partir de bitume tels que les revêtements routiers, les colles bitumineuses, les pare-vapeurs, les matériaux assurant l'étanchéité, les parois des stations d'épuration, les parois des châteaux d'eau, etc..., et les produits radioactifs que l'on trouve notamment sur les tours de refroidissement, les enceintes de réacteurs ou similaire des centrales nucléaires.

Il existe donc un besoin pour un procédé et un dispositif pour le traitement de surfaces comportant un ou plusieurs produits toxiques procurant un retrait desdits produits en toute sécurité pour les ouvriers et l'environnement.

### EXPOSE DE L'INVENTION

L'un des buts de l'invention est donc de remédier à ces inconvénients en proposant un dispositif pour la décontamination de surfaces comportant un ou plusieurs produits toxiques de conception simple et peu onéreuse, procurant le retrait desdits produits toxiques tels que l'amiante ou le plomb par exemple avec une émission quasi nulle de particules dans l'atmosphère, facilitant le retraitement des particules de produits toxiques, réduisant la pénibilité pour les ouvriers et augmentant le rendement de ces derniers.

A cet effet et conformément à l'invention, il est proposé un dispositif de décontamination de surfaces selon la revendication 1. De préférence, le dispositif comprend également un second système de filtration constitué d'une pompe munie d'au moins un filtre dont l'entrée est alimentée par l'eau de la cuve tampon de sorte que l'eau filtrée comporte des particules inférieures à 1 µm.

Par ailleurs, le groupe à haute pression alimentant la tête d'hydrodécapage délivre une pression comprise entre 300 et 7000 bars avec un débit en eau compris entre 4 et 200 L/min.

De plus, la tête d'hydrodécapage est montée sur un chariot mobile apte à se déplacer le long d'une traverse d'un cadre, ladite traverse étant apte à se déplacer le long des longerons dudit cadre.

Ledit cadre comprend des moyens de fixation de l'ensemble sur un mur ou un plafond ou similaire.

Selon une variante d'exécution, ledit cadre est monté sur un châssis comportant des roulettes.

De manière sécurisante, le chariot mobile est pilotable à distance au moyen d'une télécommande.

La presse filtreuse est constituée d'au moins un châssis muni de deux roues et d'une barre de préhension pour faciliter son transport, d'un compresseur d'air solidaire du châssis, d'une pompe de circulation entraînée par l'air comprimé produite par le compresseur d'air, et d'une unité de filtration et de pressage.

Ledit châssis est monté sur un chariot sensiblement en forme de U et comportant quatre roues multidirectionnelles munies de freins.

Ladite unité de filtration et de pressage comprend une plaque supérieure et une plaque d'extrémité qui sont reliées par au moins une tige de liaison avec interposition d'un ensemble de plaques de filtration, au moins une chambre de filtration s'étendant entre les plaques de filtration, une toile filtrante s'étendant dans ladite chambre de filtration, un dispositif de serrage apte à amener les plaques de filtration dans une position de fonctionnement dans laquelle les chambres de filtration sont pressées l'une contre l'autre de façon étanche et apte à libérer les plaques de filtration dans une position d'ouverture dans laquelle les chambres de filtration peuvent être ouvertes pour libérer les galettes de produits toxiques et de résidus de support, une plaque entretoise amovible, une plaque de pression et un dispositif de serrage sous la forme d'un coussin pneumatique qui est alimenté par le compresseur.

Par ailleurs, le coussin pneumatique est alimenté en air comprimé par le compresseur d'air à travers un premier circuit pneumatique comprenant une vanne à commande pneumatique et ledit compresseur d'air comporte deux sorties d'air comprimé, la sortie d'air alimentant en air comprimé le premier circuit pneumatique et in fine le coussin pneumatique et la deuxième sortie d'air comprimé alimentant en air comprimé un second circuit pneumatique alimentant la pompe de circulation pour l'entrainer, la vanne à commande pneumatique étant pilotée par la pression du second circuit pneumatique.

Accessoirement, le groupe à haute pression alimentant la tête d'hydrodécapage est monté sur un châssis mobile afin de faciliter son transport.

De préférence, le dispositif suivant l'invention comporte au moins un filtre à membrane pour le traitement de l'eau chargée des produits toxiques et de résidus du support recueillie dans le contenant, ledit filtre à membrane procurant une première sortie d'eau souillée plus chargée en matière qui peut être traitée par le premier système de filtration et une seconde sortie d'eau filtrée qui peut être connectée au réseau des eaux usées et/ou au groupe à haute pression.

Un autre objet de l'invention concerne un procédé de décontamination de surfaces selon la revendication 14. De manière avantageuse, le procédé suivant l'invention comprend une étape de passage de l'eau de la cuve tampon à travers au moins un filtre de sorte que l'eau ainsi filtrée comporte des particules inférieures ou égales à 1 µm.

Accessoirement, le procédé comprend également une étape d'introduction d'une charge dans le contenant préalablement au transfert du mélange d'eau, de produits toxiques et de résidus du support stocké dans le contenant vers la presse filtreuse.

Ladite charge consiste dans un liant hydraulique et/ou dans une charge minérale et/ou organique et/ou chimique.

De préférence, le procédé comporte une étape de prétraitement du mélange d'eau, de produits toxiques et de résidus du support à travers au moins un filtre à membrane, ledit filtre à membrane procurant une première sortie d'eau souillée plus chargée en matière qui est ensuite traitée par le premier système de filtration et une seconde sortie d'eau filtrée qui peut être connectée au réseau des eaux usées et/ou au groupe à haute pression.

### DESCRIPTION SOMMAIRE DES FIGURES

D'autres avantages et caractéristiques ressortiront mieux de la description qui va suivre d'une unique variante d'exécution, donnée à titre d'exemple non limitatif, du dispositif et du procédé de décontamination conforme à l'invention, en référence aux dessins annexés sur lesquels :
- la figure 1 est une vue de côté schématique du dispositif de désamiantage suivant l'invention,
- la figure 2 est une vue de dessus schématique du dispositif de décontamination suivant l'invention,
- la figure 3 est une vue de côté schématique du dispositif de décontamination suivant l'invention, monté sur un plafond,
- la figure 4 est une vue en coupe de la tête d'hydrodécapage du dispositif de décontamination au sol suivant l'invention,
- la figure 5 est une vue en perspective de la presse filtreuse du dispositif de décontamination suivant l'invention,
- la figure 6 est une vue en perspective de la presse filtreuse du dispositif de décontamination suivant l'invention, en position d'évacuation des galettes de produits toxiques et de résidus du support,
- la figure 7 est une vue en coupe schématique de la presse filtreuse du dispositif de décontamination suivant l'invention,
- la figure 8 est une représentation schématique du circuit pneumatique d'alimentation de la presse filtreuse du dispositif de décontamination suivant l'invention,
- la figure 9 est une vue en perspective du cadre portant la tête d'hydrodécapage sur un mur du dispositif de décontamination suivant l'invention,
- la figure 10 est une vue en perspective d'une variante d'exécution du cadre portant la tête d'hydrodécapage sur un plafond du dispositif de décontamination suivant l'invention,
- la figure 11 est une vue en perspective d'une variante d'exécution d'un cadre portant la tête d'hydrodécapage du dispositif de décontamination pour le traitement d'un plafond,
- la figure 12 est une vue en perspective d'un cadre portant la tête d'hydrodécapage du dispositif de décontamination pour le traitement d'un sol,
- la figure 13 est une représentation schématique en perspective d'une partie d'une variante d'exécution du dispositif de décontamination suivant l'invention,
- la figure 14 est une représentation schématique en perspective d'une seconde partie de la variante d'exécution du dispositif de décontamination suivant l'invention,
- la figure 15 est une vue en perspective déchirée d'une remorque d'un camion dans laquelle le dispositif de décontamination est installé,
- la figure 16 est une vue en perspective déchirée d'une variante d'exécution d'une remorque d'un camion dans laquelle le dispositif de décontamination est installé,
- la figure 17 est une vue en perspective d'une variante d'exécution du dispositif de décontamination suivant l'invention,
- la figure 18 est une vue en perspective d'une autre variante d'exécution du dispositif de décontamination suivant l'invention,
- la figure 19 est une vue en perspective d'une autre variante d'exécution du dispositif de décontamination suivant l'invention,
- la figure 20 est une vue en perspective d'une dernière variante d'exécution du dispositif de décontamination suivant l'invention,
- la figure 21 est une vue en perspective d'une variante d'exécution du dispositif de décontamination dont la tête d'hydrodécapage est montée sur un chariot porteur pour le traitement de surfaces industrielles,
- la figure 22 est une vue en perspective d'une variante d'exécution du dispositif de décontamination suivant l'invention particulièrement adapté pour le traitement des enrobés bitumeux,
- la figure 23 est une vue en perspective d'une autre variante d'exécution du dispositif de décontamination suivant l'invention particulièrement adapté pour le traitement de grandes surfaces d'enrobés bitumeux.

### DESCRIPTION DETAILLEE DE L'INVENTION

Dans la suite de la description du dispositif suivant l'invention, les mêmes références numériques désignent les mêmes éléments. Les vues en coupe ne sont pas nécessairement tracées à l'échelle. Par ailleurs, le dispositif suivant l'invention est particulièrement destiné au désamiantage ; toutefois, il est bien évident que le dispositif suivant l'invention pourra trouver de nombreuses applications dans le traitement de surfaces comportant des produits toxiques sans pour autant sortir du cadre de l'invention. De manière non limitative, lesdits produits toxiques pourront consister notamment dans le plomb (Pb), les PCB (biphényles polychlorés), les hydrocarbures polycycliques aromatiques (HAP) et les produits radioactifs qui sont présents dans de nombreux produits ayant de nombreuses applications telles que les revêtements de sols et plafonds, les revêtements de mur (peinture, isolation, etc...), les revêtements routiers, les colles bitumineuses, les pare-vapeurs, les matériaux assurant l'étanchéité, les parois des stations d'épuration, les parois des châteaux d'eau, les tours de refroidissement des centrales nucléaires, les enceintes de réacteurs des centrales nucléaires, etc...

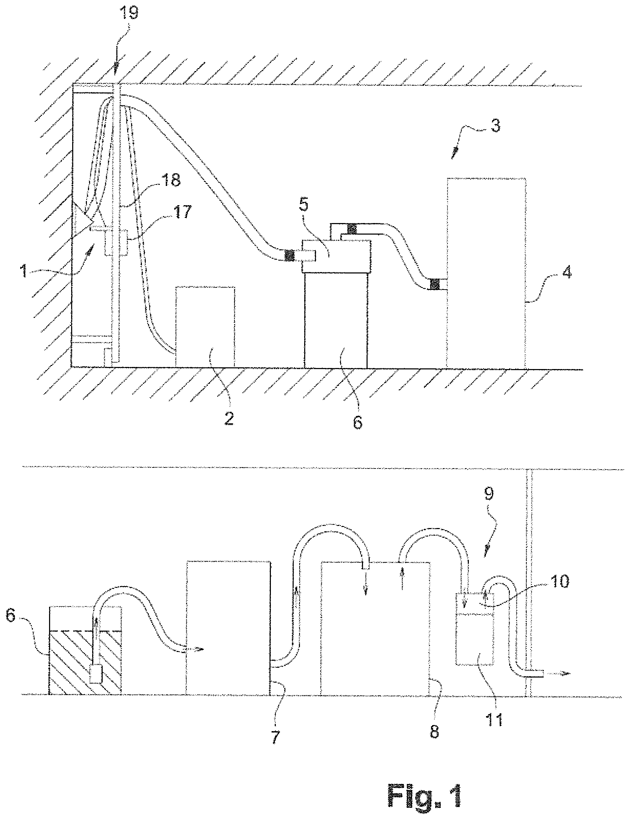

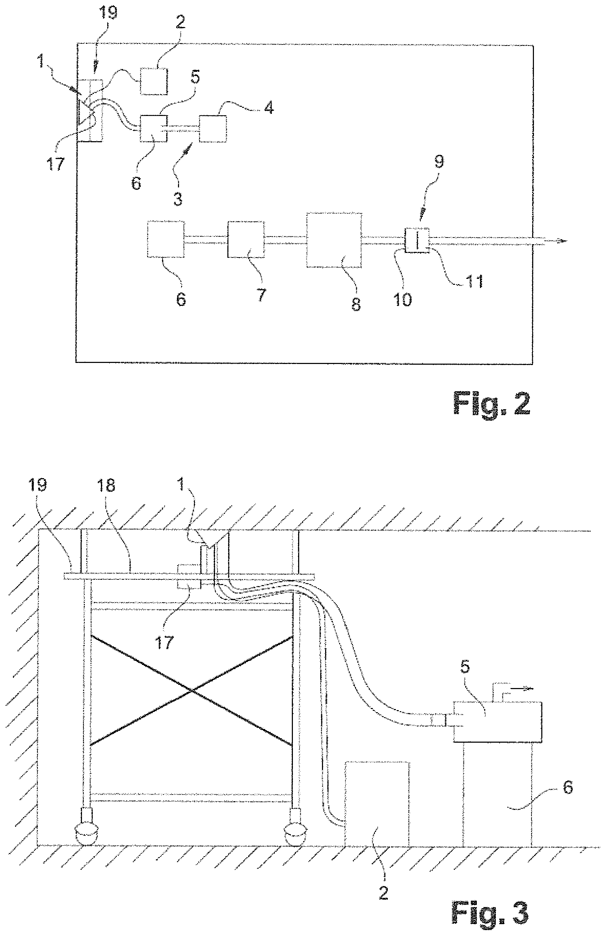

En référence aux figures 1 et 2, le dispositif de désamiantage suivant l'invention comprend au moins une tête d'hydrodécapage (1) alimentée par un groupe à haute pression (2) et connectée à une source d'aspiration (3) comprenant un aspirateur (4) et une tête cyclonique (5) montée sur un fût (6) dans lequel est recueillie l'eau chargée de particules d'amiante, un premier système de filtration (7) constitué d'une presse filtreuse dont l'entrée est alimentée par l'eau chargée de particules d'amiante recueillie dans ledit fût (6) et dont la sortie alimente une cuve tampon (8) dans laquelle l'eau issue de la première filtration comporte des particules d'amiantes inférieures ou égales à 5 µm, et optionnellement, un second système de filtration (9) constitué d'une pompe (10) munie d'un filtre (11) dont l'entrée est alimentée par l'eau de la cuve tampon (8) de sorte que, à la sortie du filtre, l'eau filtrée comporte des particules d'amiante inférieures à 1 µm.

On observera que, dans cet exemple particulier de réalisation, il est utilisé un fût (6) cylindrique ; toutefois, il est bien évident que le fût (6) pourra être substitué par tout contenant fixe ou mobile approprié sans pour autant sortir du cadre de l'invention.

Ledit groupe à haute pression (2) alimentant la tête d'hydrodécapage (1) délivre une pression comprise entre 300 et 7000 bars avec un débit en eau compris entre 4 et 200 L/min. Ledit groupe à haute pression peut consister dans un groupe à haute pression commercialisé par la société RIVARD sous la référence AQUAJET ou dans tout autre groupe à haute pression bien connu de l'homme du métier.

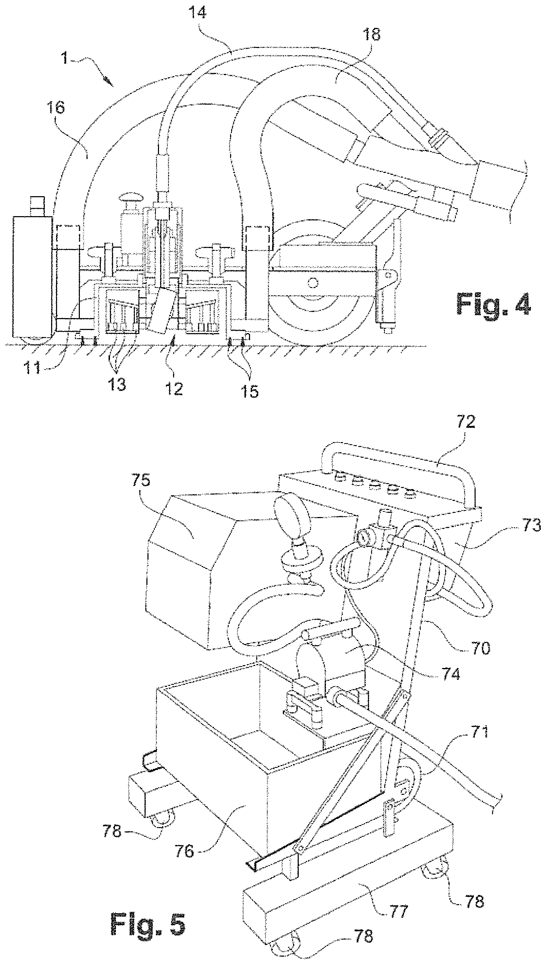

Il est bien évident que le groupe à haute pression pourra consister dans tout groupe à haute pression bien connu de l'homme du métier sans pour autant sortir du cadre de l'invention telle que définie par les revendications. En référence à la figure 4, la tête d'hydrodécapage (1) est constituée d'un carter (11) sensiblement cylindrique dans lequel s'étend une buse rotative (12) munie de trous (13), ladite buse étant alimentée par de l'eau sous haute pression au moyen d'une conduite souple (14) de manière à former des jets à la sortie des trous (13). On notera que l'orientation des trous (13) procure la rotation de la buse rotative (12). Le bord inférieur du carter (11) comporte une brosse (15) assurant l'étanchéité lorsque la tête d'hydrodécapage (1) est plaquée contre la surface à traiter. Ladite tête d'hydrodécapage (1) comporte par ailleurs des conduites d'aspiration (16) connectées à la source d'aspiration (3) représentée sur les figures 1 et 2 et débouchant dans le carter (11). Ladite tête d'hydrodécapage (1) pourra, par exemple, consister dans une tête d'hydrodécapage commercialisée par la société HAMMELMANN sous la référence AQUABLAST-PLUS par exemple, ou dans toute autre tête d'hydrodécapage bien connu de l'homme du métier.

Il est bien évident que le nombre de trous (13) et leur orientation dépendra notamment de la pression fournie par le groupe à haute pression (2) et de la nature de la surface à traiter et l'Homme du Métier n'aura pas de difficultés à déterminer le nombre de trous et leurs orientations. De plus, il est bien évident que la tête d'hydrodécapage (1) pourra consister dans toute tête d'hydrodécapage connu de l'homme du métier sans sortir du cadre de l'invention telle que définie par les revendications. De manière avantageuse, en référence aux figures 1 et 2, la tête d'hydrodécapage (1) est montée sur un chariot mobile (17) apte à se déplacer le long d'une traverse (18) d'un cadre (19), ladite traverse (17) étant apte à se déplacer le long des longerons (20) dudit cadre (19). De préférence, ledit cadre (19) comprend des moyens de fixation dudit cadre sur un mur ou un plafond ou similaire

Par ailleurs, afin d'améliorer la sécurité des ouvriers, le chariot mobile (17) sur lequel est montée la tête d'hydrodécapage (1) est avantageusement pilotable à distance au moyen d'une télécommande non représentée sur les figures.

Ledit cadre (19) et le chariot mobile peuvent consister, par exemple, dans le système commercialisé par la société CONJET sous la référence NALTA et décrit dans la demande de brevet international WO2010140952. Il est bien évident que le cadre (19) pourra consister dans tout système équivalent bien connu de l'homme du métier sans sortir du cadre de l'invention.

On notera que ledit cadre (19) pourra être monté sur un échafaudage de sorte que le cadre soit serré en compression entre le sol et le plafond, l'échafaudage comprenant des roues équipées de freins.

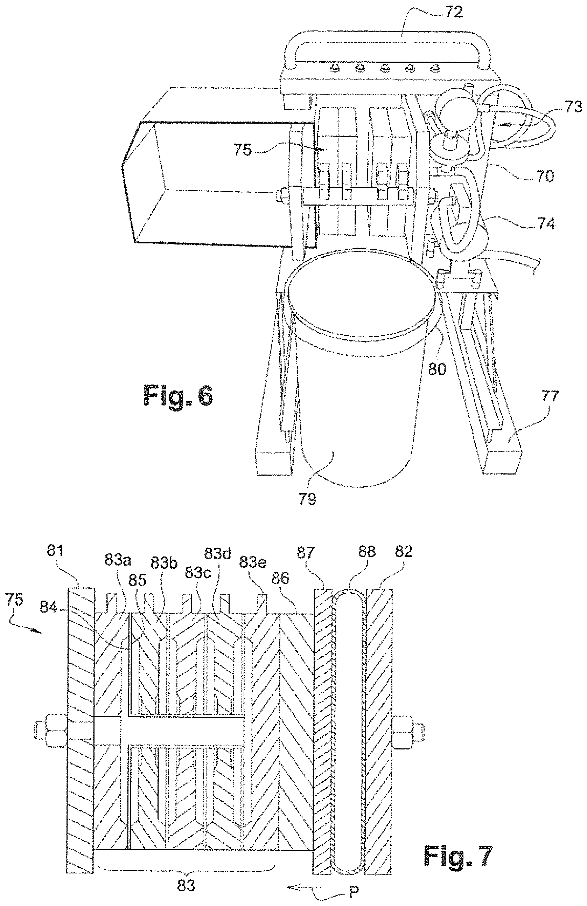

En référence à la figure 5, la presse filtreuse constituant le premier moyen de filtration (7) est constitué d'un châssis (70) muni de deux roues (71) et d'une barre de préhension (72) pour faciliter son transport, d'un compresseur d'air (73) solidaire du châssis (72), d'une pompe de circulation (74) entraînée par l'air comprimé produite par le compresseur d'air (72), et d'une unité de filtration et de pressage (75). Sous ladite unité de filtration et de pressage (75) est positionné un bac de récupération (76) de l'eau susceptible de s'écouler de l'unité de filtration et de pressage (75), ledit bac de récupération (76) prenant appui sur les longerons inférieurs du châssis (70). Ledit châssis (70) est monté sur un chariot (77) sensiblement en forme de U et comportant quatre roues (78) multidirectionnelles munies de freins. En référence à la figure 6, la forme en U du chariot (77) permet, après retrait du bac de récupération (76), le positionnement d'un fut (79) muni d'un sac plastique (80) dans lequel sont introduites les galettes compressées des fibres d'amiantes et des résidus du support issues de l'unité de filtration et de pressage comme il sera décrit plus loin. On notera que ces galettes compressées des fibres d'amiantes et des résidus du support sont humides évitant ainsi toute émission de fibres d'amiantes dans l'environnement.

En référence aux figures 5 à 7, ladite unité de filtration et de pressage (75) comprend une plaque supérieure (81) et une plaque d'extrémité (82) qui sont reliées par au moins une tige de liaison, non représentée sur les figures, avec interposition d'un ensemble (83) de plaques de filtration (83a,83b,83c,83d,83e), au moins une chambre de filtration (84) s'étendant entre les plaques de filtration (83a,83b,83c,83d,83e), une toile filtrante (85) s'étendant dans ladite chambre de filtration (84). Ladite unité comprend, par ailleurs, un dispositif de serrage apte à amener les plaques de filtration (83a,83b,83c,83d,83e) dans une position de fonctionnement dans laquelle les chambres de filtration (84) sont pressées l'une contre l'autre de façon étanche et apte à libérer les plaques de filtration (83a,83b,83c,83d,83e) dans une position d'ouverture dans laquelle les chambres de filtration (84) peuvent être ouvertes pour libérer les galettes de fibres d'amiante et de résidus de support, une plaque entretoise amovible (86), une plaque de pression (87) et un dispositif de serrage sous la forme d'un coussin pneumatique (88) qui est alimenté par le compresseur (73). Ladite presse filtreuse (7) pourra consister par exemple dans la presse filtreuse commercialisée sous les références SFP 3L ou SFP 8L par la société GÖLZ ou dans la presse filtreuse décrite dans la demande de brevet américain US2013020244 ou dans toute autre presse filtreuse équivalente.

Il est bien évident que la presse filtreuse pourra consister dans toute autre presse filtreuse bien connue de l'homme du métier, telle que la presse filtreuse décrite dans le brevet européen EP 2 396 098 par exemple, sans sortir du cadre de l'invention telle que définie par les revendications.

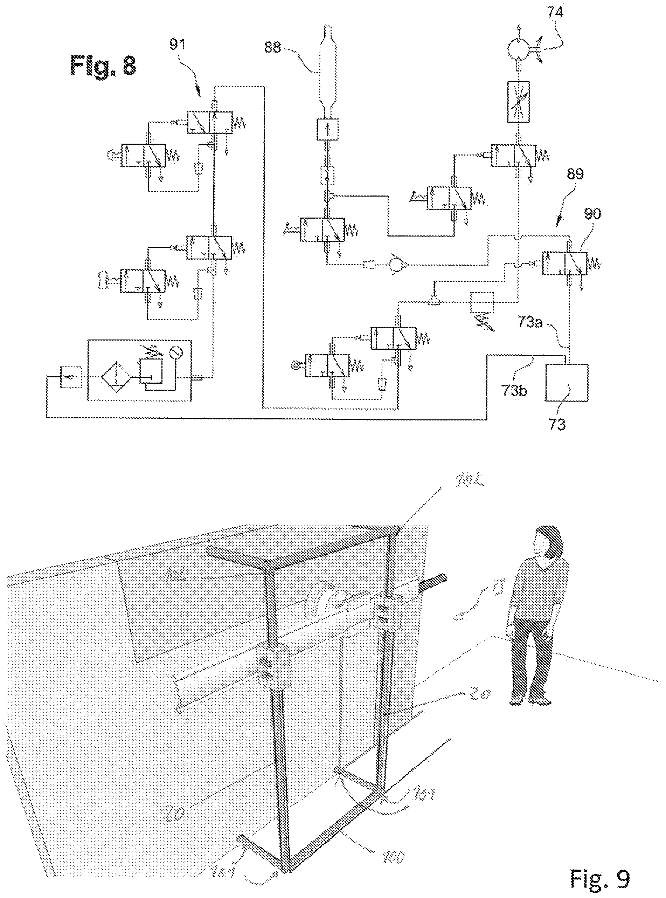

En référence à la figure 8, le coussin pneumatique (88) est alimenté en air comprimé par le compresseur d'air (73) à travers un premier circuit pneumatique (89) comprenant une vanne à commande pneumatique (90). Ledit compresseur d'air (73) comporte deux sorties d'air comprimé (73a) et (73b), la sortie d'air (73a) alimentant en air comprimé le premier circuit pneumatique (89) et in fine le coussin pneumatique (88) et la deuxième sortie d'air comprimé (73b) alimentant en air comprimé un second circuit pneumatique (91) alimentant la pompe de circulation (74) pour l'entrainer. La vanne à commande pneumatique (90) est pilotée par la pression du second circuit pneumatique (91). Un tel montage permet de procurer un plus grand débit à la pompe de circulation (74) et de procurer un gonflage simultané du coussin pneumatique (88).

Selon une variante d'exécution, en référence à la figure 9, ledit cadre (19) est monté sur un châssis (100) comportant des roulettes (101) ou similaire munies de freins. Par ailleurs, les longerons (20) comportent à leur extrémité supérieure des vérins mécaniques (102) constitués d'une vis sans fin afin de faire varier leur longueur. De cette manière, il est possible d'assurer le blocage du cadre (19) le long d'un mur en positionnant ledit cadre (19) contre le mur puis en pressant l'extrémité supérieure dudit cadre (19) contre le plafond en actionnant les vérins, les freins des roues (101) étant préalablement bloqués.

Il est bien évident que les vérins mécaniques (102) pourront être substitués part tout autre vérin bien connu de l'homme du métier tel qu'un vérin pneumatique, hydraulique, électrique ou similaire sans pour autant sortir du cadre de l'invention.

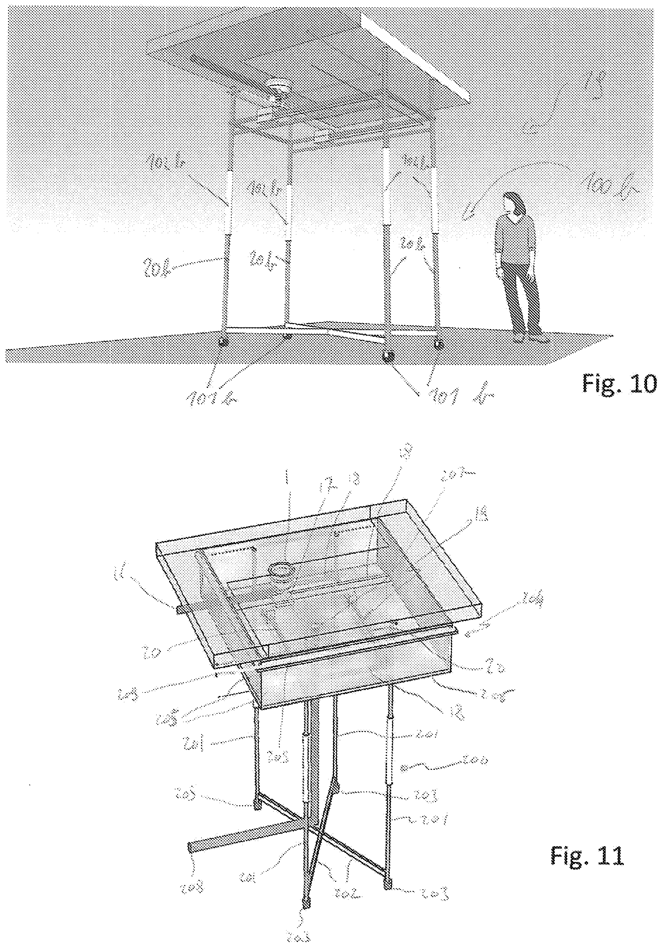

Selon une variante d'exécution, en référence à la figure 10, ledit cadre (19b) est monté sur un châssis (100b) comportant des roulettes (101b) ou similaire équipé de freins. Par ailleurs, les longerons (20b) comportent des vérins (102b) afin de faire varier leur longueur. De cette manière, il est possible d'assurer le blocage du cadre (19b) au plafond, les freins des roues (101b) étant préalablement bloqués.

On expliquera maintenant le fonctionnement du dispositif suivant l'invention en référence aux figures 1 et 2.

Le cadre (19) du dispositif étant préalablement positionné au droit d'un mur comportant un revêtement mural comportant des fibres d'amiante, la tête d'hydrodécapage (1) est alimentée en eau sous pression par le groupe à haute pression (2) qui est mis en route. Simultanément, la source d'aspiration (3) est actionnée afin d'assurer une dépression dans la tête d'hydrodécapage (1). Cette dernière décolle le revêtement mural contenant les fibres d'amiantes et le mélange d'eau, de fibres d'amiantes et de résidus du support mural est aspiré jusque dans le fût (6).

Lorsque le fût (6) est rempli, la tête cyclonique (5) est retirée puis placée sur un fût (6) vide. Le fût (6) rempli d'eau, de fibres d'amiantes et de résidus du support mural est alors placé sur la deuxième partie du dispositif. Une conduite (200) alimentant la presse filtreuse (7) est positionnée dans le fût (6) et le mélange d'eau, de fibres d'amiantes et de résidus du support mural est aspiré dans ladite presse filtreuse (7) au moyen de sa pompe de circulation (74). Ladite presse filtreuse (7) procure d'une part des galettes de fibres d'amiante et de résidus du support mural au moyen de ses chambres de filtration et d'autre part de l'eau comportant des particules d'amiantes inférieures ou égales à 5 µm. Les galettes de fibres d'amiante et de résidus du support mural sont évacuées des chambres de filtration de la presse filtreuse en les ouvrant et lesdites galettes tombent, en référence à la figure 6, dans le sac plastique (80) s'étendant dans le fut (79) positionné sous l'unité de filtration et de pressage (75). Lorsque le sac plastique (80) est plein, il est hermétiquement fermé puis évacué vers un centre de traitement des fibres d'amiante adapté. L'eau comportant des particules d'amiantes inférieures ou égales à 5 µm est alors déposée dans la cuve tampon (8) puis traitée par un second système de filtration constitué d'une pompe (10) munie d'un ou plusieurs filtre(s) (11) de sorte que l'eau filtrée comporte des particules d'amiante inférieures à 1 µm. Cette eau peut alors être rejetée dans le circuit d'eau domestique ou être réintroduite dans le groupe à haute pression (2) pour alimenter la tête d'hydrodécapage. On notera que la structure et le nombre de filtres (11) dépendra notamment de la nature du support traité et de sa friabilité.

Selon une variante d'exécution, une charge est introduite dans le fût (6) rempli d'eau, de fibres d'amiantes et de résidus du support mural avant d'être placé sur la deuxième partie du dispositif. Cette charge peut consister dans un liant hydraulique, dans une proportion de 20 à 200 g de liant pour 100 litres, tel que du ciment portland, de la chaux ou tout autre liant hydraulique bien connu de l'homme du métier, et/ou dans une charge minérale telle que du sable et/ou de la craie et/ou du talc et/ou du noir de carbone et/ou de la silice synthétique (agent thixotropique) et/ou du mica et/ou du kaolin et/ou du sulfate de baryum et/ou ferrite de baryum, etc... et/ou dans une charge organique telle que de la farine de bois ou d'écorce de fruit et/ou de la pâte de cellulose, etc... et/ou dans une charge chimique. De cette manière, ladite charge procure un liant dans les galettes de fibres d'amiante et de résidus du support mural produites par la presse filtreuse (7) procurant une plus grande stabilité des galettes au cours du temps et facilitant ainsi leur traitement ultérieur.

Accessoirement, le groupe à haute pression (2) et/ou la source d'aspiration (3) et/ou la presse filtreuse (7) et/ou la cuve tampon (8) peut être monté sur un châssis mobile afin de faciliter leur transport.

Selon une variante d'exécution, en référence à la figure 11, afin de permettre la décontamination d'un plafond ou d'une sous-pente par exemple, ledit cadre (19) portant la tête d'hydrodécapage (1) est constitué de longerons (20) et de traverses (18), ladite tête d'hydrodécapage (1) étant montée sur un chariot mobile (17) apte à se déplacer le long d'une traverse (18). Ledit cadre (19) est monté sur un châssis (200) constitué de quatre montants verticaux télescopiques (201) solidaires du cadre (1) à proximité de leurs extrémités supérieures et dont les extrémités inférieures sont reliées par des entretoises croisées (202). Accessoirement, les extrémités inférieures des montants verticaux télescopiques (201) sont munies de roulettes (203), éventuellement munies de freins, afin de permettre un déplacement rapide et aisé du cadre (19) au droit de la surface à traiter.

Par ailleurs, le châssis (200) peut avantageusement comprendre un bac de récupération (204) comportant des parois latérales (205) et une paroi de fond (206) de telle sorte que ledit bac (204) soit ouvert à son extrémité supérieure, les bords des parois latérales étant prenant appui sur le plafond à traiter. Le cadre (19) portant la tête d'hydrodécapage (1) s'étend à l'intérieur du bac de récupération (204) dont l'une des parois latérales (204) comprend une lumière munie d'un joint-lèvre pour l'étanchéité et à travers laquelle s'étend la conduite d'aspiration (16) de ladite tête d'hydrodécapage (1). Dans cet exemple particulier de réalisation, le bac de récupération (204) présente une forme sensiblement parallélépipédique ; toutefois, il est bien évident que ledit bac de récupération (204) pourra présenter une forme quelconque sans pour autant sortir du cadre de l'invention. Par ailleurs, la paroi de fond (206) du bac de récupération comporte un trou d'évacuation (207) connecté à une seconde conduite d'aspiration (208), ladite seconde conduite d'aspiration (208) étant, par exemple, connectée à une source d'aspiration comprenant un aspirateur et une tête cyclonique montée sur un fût. Ledit bac de récupération (204) permet ainsi de récupérer les éventuelles coulures d'eau chargée de produits toxiques et de résidus et/ou de contrôler et capter une émissivité de produits toxiques non initialement maîtrisée, pour ensuite les traiter conformément au procédé précédemment décrit.

Afin d'éviter toute émission de particules de produits toxiques dans l'atmosphère, le châssis (200) peut avantageusement comprendre un tuyau brumisateur (209) s'étendant à la périphérie du bac de récupération (204), à l'extérieur de ce dernier, et connecté à une source d'eau sous pression afin de produire un brouillard dont les gouttelettes sont aptes à piéger les éventuelles particules de produits toxiques s'échappant dudit bac (204) ou généré par le bord du cadre avec le support contaminé traité. On notera que le châssis (200) pourra également comprendre un second tuyau brumisateur, non représenté sur les figures, s'étendant à la périphérie du bac de récupération (204) à l'intérieur de dernier, et connecté à une source d'eau sous pression. On observera que ladite source d'eau sous pression pourra consister dans le réseau d'eau courante par exemple ou de l'eau de recyclage après filtration.

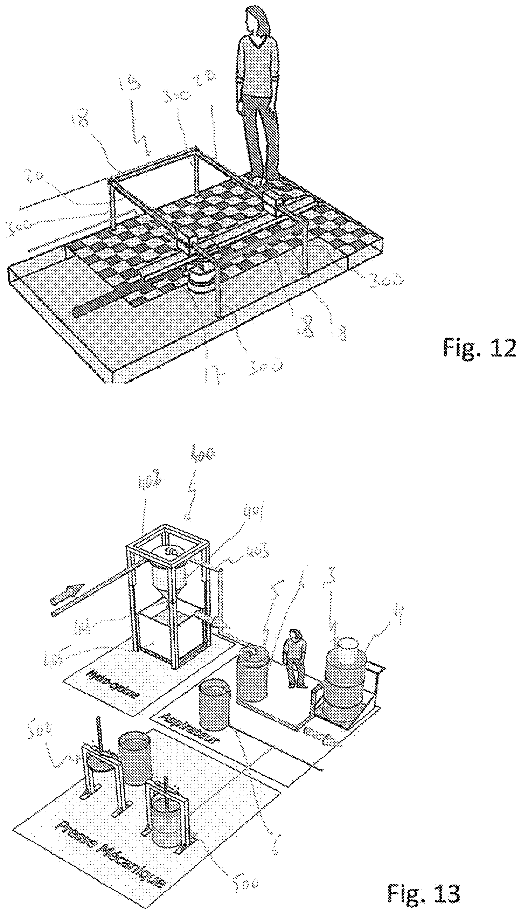

Selon une autre variante d'exécution, en référence à la figure 12, pour le traitement d'un sol, ledit cadre (19) portant la tête d'hydrodécapage (1) est constitué de longerons (20) et de traverses (18), ladite tête d'hydrodécapage (1) étant montée sur un chariot mobile (17) apte à se déplacer le long d'une traverse (18), et de quatre pieds (300) solidaires des traverses (18) et des longerons (20). Lesdits pieds (300) sont, de préférence, arrimés ou fixés aux traverses (18) pour permettre un glissement de ces dernières.

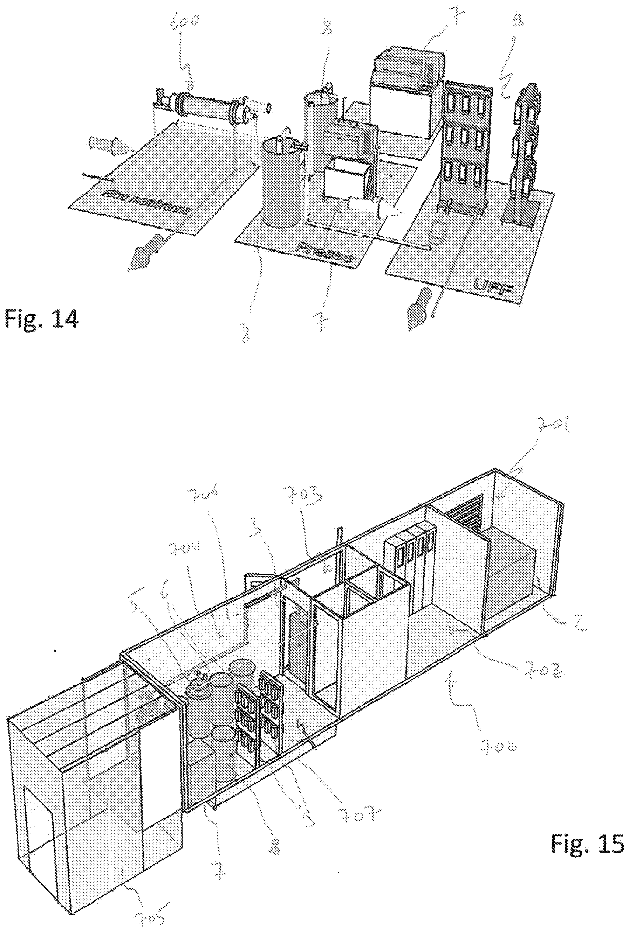

Selon une autre variante d'exécution du dispositif conforme à l'invention, en référence aux figures 13 et 14, ce dernier comprend de la même manière que précédemment une tête d'hydrodécapage, non représentée sur les figures 13 et 14, alimentée par un groupe à haute pression (2) et connectée à une source d'aspiration (3) comprenant un aspirateur (4) et une tête cyclonique (5) montée sur un fût (6) dans lequel est recueillie l'eau chargée de particules d'amiante. Ledit dispositif comporte également des cuves tampon (8), un premier système de filtration (7) constitué d'une presse filtreuse et, optionnellement, un second système de filtration (9) de sorte que, à la sortie du filtre, l'eau filtrée comporte des particules d'amiante inférieures à 1 µm.

Le dispositif se distingue de celui précédemment décrit par le fait qu'il comporte un filtre hydrocyclone (400) positionné entre la tête d'hydrodécapage et la tête cyclonique (5) afin de procéder à un pré-filtrage de l'eau et retirer de cette dernière les plus gros résidus. Ledit filtre hydrocyclone est constitué, de manière bien connue en soi, d'un corps sensiblement tronconique (401) comportant à son extrémité supérieure un tuyau d'entrée (402) connecté à la tête d'hydrodécapage, un tuyau de décharge supérieur (403), connecté à la tête cyclonique (5) et un tuyau de décharge inférieur (404) débouchant sur un réservoir de décharge (405) qui reçoit les produits toxiques et les résidus du support. Ainsi, l'eau chargée de particules d'amiante, provenant de la tête d'hydrodécapage, est introduite dans le filtre hydrocyclone par le tuyau d'entrée (402) et, sous la pression, se transforme en tourbillon formant le vortex primaire descendant. Le rétrécissement du diamètre au niveau de la partie inférieure du corps tronconique (401) et l'effet d'étranglement qui en résulte procure la formation d'un vortex secondaire ascendant qui tourne dans le même sens que le vortex primaire descendant mais qui se dirige vers le haut dans la partie centrale du corps tronconique (401). Grâce à la force centrifuge, les particules les plus lourdes sont projetées contre la paroi interne du corps tronconique (401) et sont transportées par une faible quantité d'eau jusqu'au tuyau de décharge inférieur (404) pour tomber dans le réservoir de décharge (405).

On notera que les fibres d'amiantes et les résidus du support tombant dans le réservoir de décharge (405) sont légèrement humides évitant ainsi toute émission de fibres d'amiantes dans l'environnement. Lesdites fibres d'amiantes et les résidus du support du réservoir de décharge (405) sont ensuite évacués par tout moyen approprié. Lesdites fibres d'amiantes et les résidus du support contenus dans le réservoir de décharge (405) peuvent, par exemple, être pressés dans une presse mécanique (500) afin de former des galettes de résidus qui sont ensuite évacuées et traitées dans un centre de traitement approprié. L'eau issue du pressage peut être réintroduite dans les futs (6) par exemple. De plus, certains matériaux peuvent ne pas être mis en suspension dans l'eau, malgré l'action de l'eau lors de la dépose. Ainsi, la presse mécanique (500) permet par action d'un filtre grille, et/ou une membrane textile, adaptée, de compacter lesdits matériaux. L'eau issue de ce compactage est souillée et peut être traitée par la suite du dispositif et la matière non mise en suspension compacté dans le fond de la presse mécanique (500) peut être conditionnée selon la réglementation en vigueur qui la concerne.

Le dispositif peut également comporter un filtre à membrane (600) bien connu de l'homme du métier afin de filtrer l'eau récupérée dans les futs (6) à l'issue du pressage des fibres d'amiantes et des résidus du support au moyens de la presse mécanique (500). A la sortie, on obtient d'un côté une eau plus chargée en matière toxique et une quantité de support traité qui peut être réorientée dans la chaine de traitement, et, de l'autre côté, une eau parfaitement filtrée qui peut, en fonction de la qualité de filtration effectuée, être réorientée dans le réseau des eaux usées, ou dans le groupe ultra haute pression (2).

Par ailleurs, de la même manière que précédemment, le dispositif comporte également des cuves tampon (8), un premier système de filtration (7) constitué d'une presse filtreuse et, optionnellement, un second système de filtration (9) constitué d'une pluralité de filtres montés sur un panneau vertical par exemple, et d'une pompe (10) de sorte que, à la sortie du filtre, l'eau filtrée comporte des particules d'amiante inférieures à 1 µm.

En référence à la figure 15, le dispositif suivant l'invention peut avantageusement être monté dans une remorque de camion (700) comportant une pluralité de compartiments (701,702,703,704). D'avant en arrière de la remorque, un premier compartiment (701) peut par exemple recevoir le groupe à haute pression (2), un second compartiment (702) peut être utilisé comme vestiaire pour les ouvriers, un troisième compartiment (703) peut recevoir la source d'aspiration (3) et un dernier compartiment (704) peut recevoir une pluralité de futs (6) dont un ou plusieurs portent une tête cyclonique (5), un premier système de filtration (7) constitué d'une presse filtreuse et, un second système de filtration (9) constitué d'une pluralité de filtres montés sur un panneau vertical par exemple. L'extrémité arrière de la remorque (700) peut également comporter un auvent (705) en polyane ou similaire formant un sas. De plus, afin d'éviter toute présence de particules d'amiante dans le dernier compartiment (704), ce dernier comporte avantageusement un réseau de tuyaux d'aspersion d'eau (706) connecté à une source d'eau, le sol du compartiment (704) comportant une bouche d'évacuation, non représentée. Ainsi, régulièrement, les ouvriers pourront déclencher une aspersion d'eau dans l'ensemble du compartiment (704) afin de le nettoyer et de le sécuriser en empêchant tout risque d'émissivité de particules d'amiante. Accessoirement, la remorque (700) peut comprendre un bac de rétention (707) s'étendant sous le châssis de ladite remorque (700) pour récupérer toutes les eaux de nettoyage et les éventuelles fuites en vue de leur filtration suivant l'invention, ainsi qu'un réservoir d'eau recyclée. Cette eau recyclée peut-être réintroduite dans le groupe ultra haute pression (2) ou affecté au nettoyage, en fonction de la qualité de filtration visée.

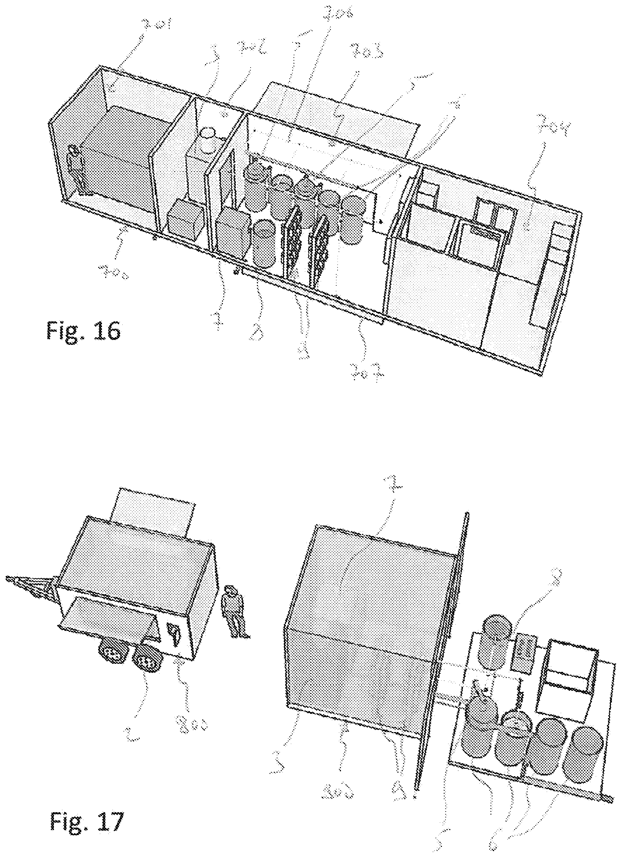

Selon une variante d'exécution, en référence à la figure 16, la remorque (700) comporte, d'avant en arrière, un premier compartiment (701) recevant le groupe à haute pression (2), un second compartiment (702) recevant la source d'aspiration (3), un troisième compartiment (703) recevant une pluralité de futs (6) dont un ou plusieurs portent une tête cyclonique (5), un premier système de filtration (7) constitué d'une presse filtreuse et, un second système de filtration (9) constitué d'une pluralité de filtres montés sur un panneau vertical par exemple, et un dernier compartiment utilisé comme vestiaire par les ouvriers. Afin d'éviter toute présence de particules d'amiante dans le troisième compartiment (703), ce dernier comporte avantageusement un réseau de tuyaux d'aspersion d'eau (706) connecté à une source d'eau, le sol du compartiment (704) comportant une bouche d'évacuation, non représentée. Accessoirement, la remorque (700) peut comprendre un bac de rétention (707) s'étendant sous le châssis de ladite remorque (700) pour récupérer toutes les eaux de nettoyage et les éventuelles fuites en vue de leur filtration suivant l'invention, ainsi qu'un réservoir d'eau recyclée. Cette eau recyclée peut-être réintroduite dans le groupe ultra haute pression (2) ou affecté au nettoyage, en fonction de la qualité de filtration visée.

Selon une autre variante d'exécution, en référence à la figure 17, le dispositif suivant l'invention peut être transporté au moyen d'une remorque légère (800) dans laquelle est positionné le groupe à haute pression (2) et d'un petit conteneur (900) dans lequel sont positionnés la source d'aspiration (3), le premier système de filtration (7) constitué d'une presse filtreuse et le second système de filtration (9) constitué d'une pluralité de filtres montés sur un panneau vertical par exemple, les futs (6), la tête cyclonique (5) et les futs tampons (8) étant positionnés à l'extérieur.

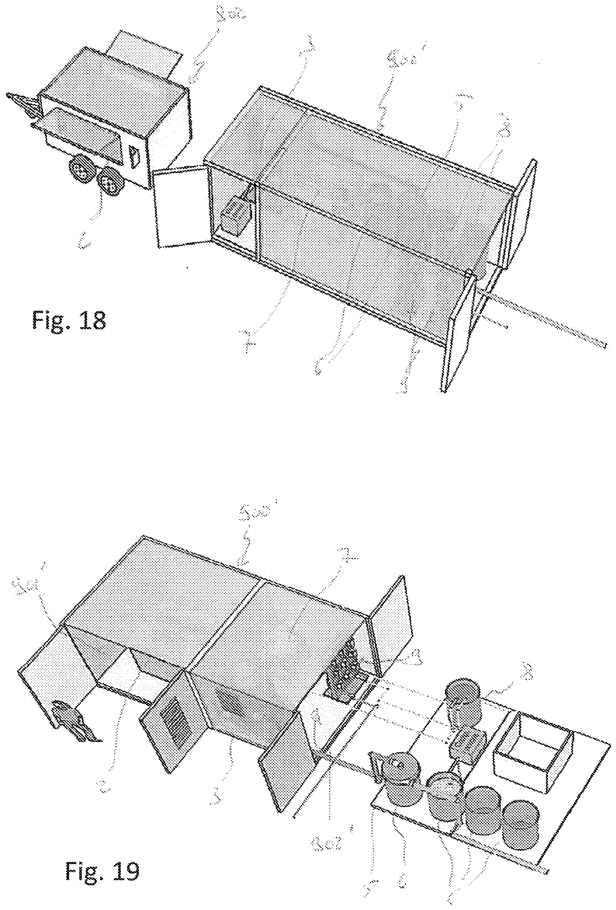

Selon une autre variante d'exécution, en référence à la figure 18, le dispositif suivant l'invention peut être transporté au moyen d'une remorque légère (800) dans laquelle est positionné le groupe à haute pression (2) et d'un grand conteneur (900') comprenant deux compartiments (901',902'), un premier compartiment (901') recevant la source d'aspiration (3) et un second compartiment (902') recevant le premier système de filtration (7) constitué d'une presse filtreuse, le second système de filtration (9) constitué d'une pluralité de filtres montés sur un panneau vertical par exemple, les futs (6), la tête cyclonique (5) et les futs tampons (8).

Selon une autre variante d'exécution, en référence à la figure 19, le dispositif suivant l'invention peut être transporté au moyen d'un grand conteneur (900') comprenant deux compartiments (901',902'), un premier compartiment (901') recevant le groupe à haute pression (2) et un second compartiment (902') recevant la source d'aspiration (3), le premier système de filtration (7) constitué d'une presse filtreuse, et le second système de filtration (9) constitué d'une pluralité de filtres montés sur un panneau vertical par exemple, les futs (6), la tête cyclonique (5) et les futs tampons (8) étant positionnés à l'extérieur du conteneur (900').

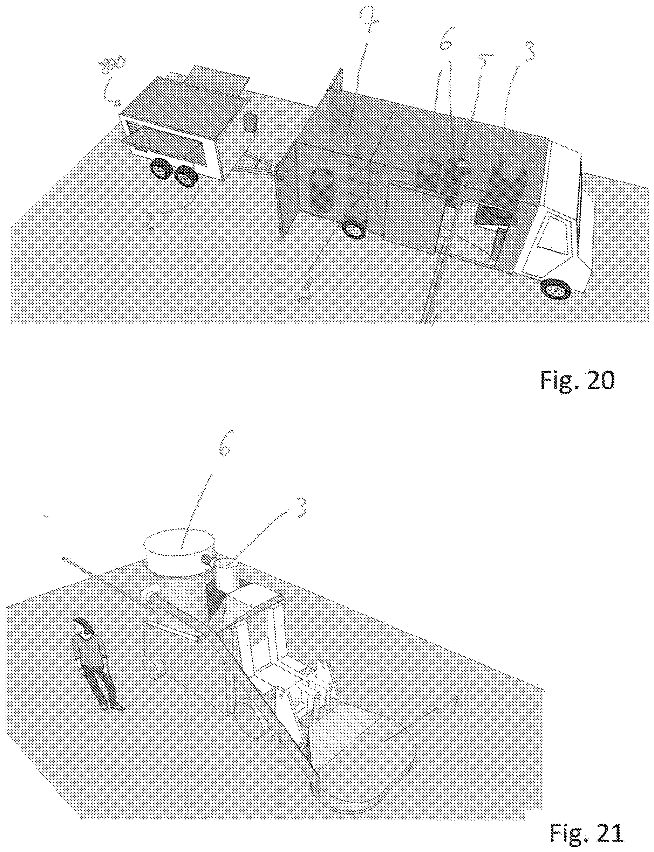

Selon une autre variante d'exécution, en référence à la figure 20, particulièrement adaptée pour des chantiers de faibles durées, c'est-à-dire des chantiers de 1 à 2 jours, le dispositif suivant l'invention peut être transporté au moyen d'une remorque légère (800) dans laquelle est positionné le groupe à haute pression (2) et accroché à une camionnette comprenant deux compartiments, un premier compartiment recevant la source d'aspiration (3), les futs (6) et la tête cyclonique (5) et un second compartiment recevant le premier système de filtration (7) constitué d'une presse filtreuse et le second système de filtration (9) constitué d'une pluralité de filtres montés sur un panneau vertical par exemple.

Afin de traiter de grandes surfaces d'un sol industriel par exemple, en référence à la figure 21, la tête d'hydrodécapage (1) peut avantageusement être montée à l'avant d'un chariot motorisé, la source d'aspiration (3), un fût (6) muni de la tête cyclonique (5) étant montés dans la partie arrière dudit chariot. Lorsque le fût (6) est plein, il est déchargé pour que son contenu soit traité conformément au procédé suivant l'invention. On notera que le chariot motorisé pourra comporter plusieurs têtes d'hydrodécapage sans pour autant sortir du cadre de l'invention.

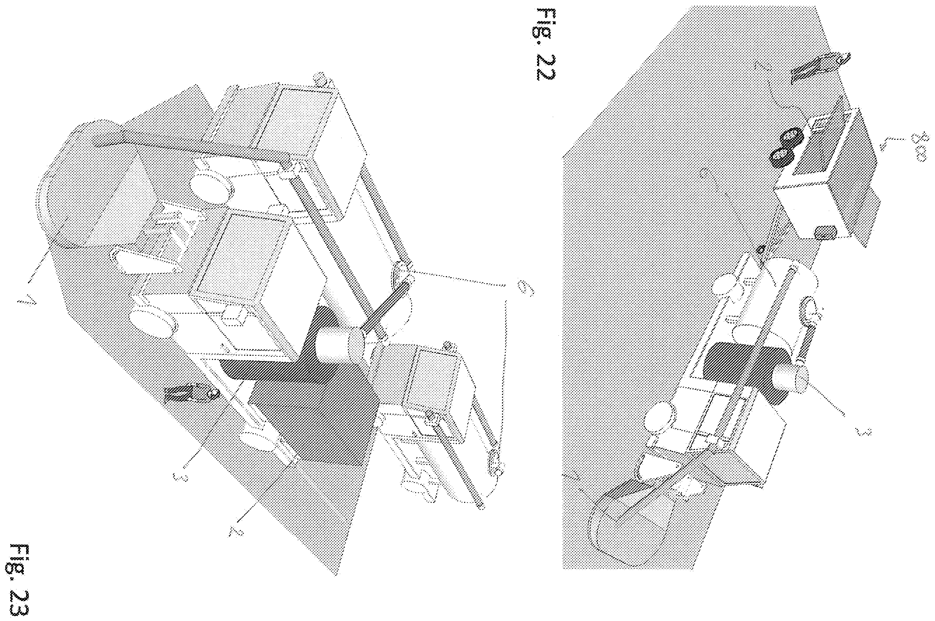

Afin de traiter des enrobés bitumeux, en référence à la figure 22, le dispositif suivant l'invention peut consister dans un véhicule comportant à l'avant une ou plusieurs tête d'hydrodécapage (1) et à l'arrière une source d'aspiration (3), un fût (6) et une tête cyclonique (5), ledit véhicule tractant une remorque (800) sur laquelle est positionné le groupe ultra haute pression (2).

Selon une variante d'exécution, en référence à la figure 23, le véhicule comporte à l'avant une ou plusieurs tête d'hydrodécapage (1) et à l'arrière une source d'aspiration (3) et un groupe ultra haute pression (2), les contenants (6) consistant dans les citernes de camion-citernes.

Il est bien évident que de nombreuses autres configurations pour le transport peuvent être imaginées sans pour autant sortir du cadre de l'invention telle que définie par les revendications. Enfin, il est bien évident que les exemples que l'on vient de donner ne sont que des illustrations particulières et en aucun cas limitatif quant aux domaines d'application de l'invention telle que définie par les revendications.

## Revendications

1. Dispositif de décontamination de surfaces comportant un ou plusieurs produits toxiques, comprenant au moins une tête d'hydrodécapage (1) comportant un volume fermé apte à réaliser une aspiration d'un mélange d'eau de produits toxiques et de résidus, la tête d'hydrodécapage (1) étant alimentée par un groupe à haute pression (2) et connectée à une source d'aspiration (3) comprenant une source de dépression (4) connectée à une tête cyclonique (5) montée sur un contenant (6) dans lequel est recueillie l'eau chargée des produits toxiques et de résidus du support, un premier système de filtration (7) constitué d'une presse filtreuse dont l'entrée est alimentée par l'eau chargée des produits toxiques recueillie dans ledit contenant (6) et dont la sortie alimente une cuve tampon (8), le premier système de filtration (7) étant apte à filtrer les particules supérieures ou égales à 5 µm.

2. Dispositif de décontamination suivant la revendication 1, ***caractérisé* en ce qu'**il comprend un second système de filtration (9) constitué d'une pompe (10) munie d'au moins un filtre (11), le filtre (11) étant apte à filtrer les particules supérieures ou égales à 1 µm.

3. Dispositif de décontamination suivant l'une quelconque des revendications 1 ou 2, ***caractérisé* en ce que** le groupe à haute pression (2) alimentant la tête d'hydrodécapage (1) est apte à délivrer une pression comprise entre 300 et 7000 bars avec un débit en eau compris entre 4 et 200 L/min.

4. Dispositif de décontamination suivant l'une quelconque des revendications 1 à 3, ***caractérisé* en ce que** la tête d'hydrodécapage (1) est montée sur un chariot mobile (17) apte à se déplacer le long d'une traverse (18) d'un cadre (19), ladite traverse (18) étant apte à se déplacer le long des longerons (20) dudit cadre (19).

5. Dispositif de décontamination suivant la revendication 4, ***caractérisé* en ce que** le cadre (19) comprend des moyens de fixation dudit cadre (19) sur un mur ou un plafond ou un sol ou similaire.

6. Dispositif de décontamination suivant la revendication 5, ***caractérisé* en ce que** le cadre (9) est monté sur un châssis (100) comportant des roulettes (101).

7. Dispositif de décontamination suivant l'une quelconque des revendications 4 à 6, ***caractérisé* en ce que** le chariot mobile (17) est pilotable à distance au moyen d'une télécommande.

8. Dispositif de décontamination suivant l'une quelconque des revendication 1 à 7, ***caractérisé* en ce que** la presse filtreuse (7) est constituée d'au moins un châssis (70) muni de deux roues (71) et d'une barre de préhension (72) pour faciliter son transport, d'un compresseur d'air (73) solidaire du châssis (72), d'une pompe de circulation (74) entraînée par l'air comprimé produite par le compresseur d'air (72), et d'une unité de filtration et de pressage (75).

9. Dispositif de décontamination suivant la revendication 8, ***caractérisé* en ce que** ledit châssis (70) est monté sur un chariot (77) sensiblement en forme de U et comportant quatre roues (78) multidirectionnelles munies de freins.

10. Dispositif de décontamination suivant l'une quelconque des revendication 8 ou 9, ***caractérisé* en ce que** ladite unité de filtration et de pressage (75) comprend une plaque supérieure (81) et une plaque d'extrémité (82) qui sont reliées par au moins une tige de liaison avec interposition d'un ensemble (83) de plaques de filtration (83a,83b,83c,83d,83e), au moins une chambre de filtration (84) s'étendant entre les plaques de filtration (83a,83b,83c,83d,83e), une toile filtrante (85) s'étendant dans ladite chambre de filtration (84), un dispositif de serrage apte à amener les plaques de filtration (83a,83b,83c,83d,83e) dans une position de fonctionnement dans laquelle les chambres de filtration (84) sont pressées l'une contre l'autre de façon étanche et apte à libérer les plaques de filtration (83a,83b,83c,83d,83e) dans une position d'ouverture dans laquelle les chambres de filtration (84) peuvent être ouvertes pour libérer les galettes de produits toxiques et de résidus de support, une plaque entretoise amovible (86), une plaque de pression (87) et un dispositif de serrage sous la forme d'un coussin pneumatique (88) qui est alimenté par le compresseur (73).

11. Dispositif de décontamination suivant la revendication 10, ***caractérisé* en ce que** le coussin pneumatique (88) est alimenté en air comprimé par le compresseur d'air (73) à travers un premier circuit pneumatique (89) comprenant une vanne à commande pneumatique (90) et **en ce que** ledit compresseur d'air (73) comporte deux sorties d'air comprimé (73a) et (73b), la sortie d'air (73a) alimentant en air comprimé le premier circuit pneumatique (89) et in fine le coussin pneumatique (88) et la deuxième sortie d'air comprimé (73b) alimentant en air comprimé un second circuit pneumatique (91) alimentant la pompe de circulation (74) pour l'entrainer, la vanne à commande pneumatique (90) étant pilotée par la pression du second circuit pneumatique (91).

12. Dispositif de décontamination suivant l'une quelconque des revendications 1 à 11, ***caractérisé* en ce que** le groupe à haute pression (2) alimentant la tête d'hydrodécapage est monté sur un châssis mobile afin de faciliter son transport.

13. Dispositif de décontamination suivant l'une quelconque des revendications 1 à 12, ***caractérisé* en ce qu'**il comporte au moins un filtre à membrane (600) pour le traitement de l'eau chargée des produits toxiques et de résidus du support recueillie dans le contenant (6), ledit filtre à membrane (600) procurant une première sortie d'eau souillée plus chargée en matière qui peut être traitée par le premier système de filtration (7) et une seconde sortie d'eau filtrée qui peut être connectée au réseau des eaux usées et/ou au groupe à haute pression (2).

14. Procédé de décontamination de surfaces comportant un ou plusieurs produits toxiques, comprenant au moins les étapes suivantes de :
a) retrait d'une couche comportant des produits toxiques sur un support au moyen d'au moins une tête d'hydrodécapage (1) projetant, dans un volume fermé déterminé, un jet à haute pression,
b) aspiration du mélange d'eau, de produits toxiques et de résidus du support, à l'intérieur du volume fermé de la tête d'hydrodécapage (1), et stockage dans un contenant (6),
c) transfert du mélange d'eau, de produits toxiques et de résidus du support stocké dans le contenant (6) vers une presse filtreuse (7) pour former des galettes humides de produits toxiques et de résidus du support, la presse filtreuse (7) étant apte à filtrer les particules supérieures ou égales à 5 µm vers une cuve tampon (8).

15. Procédé de décontamination de surfaces suivant la revendication 14, ***caractérisé* en ce qu'**il comprend une étape de passage de l'eau de la cuve tampon (8) à travers au moins un filtre (11), le filtre (11) étant apte à filtrer les particules supérieures ou égales à 1 µm.

## Patentansprüche

1. Vorrichtung zum Dekontaminieren von Oberflächen mit einem oder mehreren toxischen Produkten mit mindestens einem Hochdruckreinigungskopf (1), mit einem geschlossenen Behälter zur Ansaugung einer Mischung aus Wasser und toxischen Produkten und Rückstände, wobei der Hochdruckreinigungskopf (1) durch eine Hochdruckeinheit (2) gespeist wird und mit einer Vakuumquelle (3) verbunden ist, die eine Niederdruckquelle (4) umfasst, die mit einem Zyklonkopf (5) verbunden ist, der an einem Behälter (6) angebracht ist, in dem das mit toxischen Produkten und Trägerresten belastete Wasser gesammelt wird, einem ersten Filtersystem (7) bestehend aus einer Filterpresse, diese Filterpresse wird mit dem mit toxischen Produkten und Trägerresten belasteten Wasser gespeist, die in diesem Behälter (6) gesammelt werden, ihr Auslass wiederum speist einen Puffertank (8), das erste Filtersystem (7) ist dabei in der Lage Teilchen von größer oder gleich 5 µm herauszufiltern.

2. Dekontaminierungsvorrichtung nach Anspruch 1, ***dadurch gekennzeichnet, dass*** sie ein zweites Filtersystem (9) umfasst, bestehend aus einer Pumpe (10), ausgerüstet mit mindestens einem Filter (11), der Filter (11) ist in der Lage Teilchen von größer oder gleich 1 µm herauszufiltern.

3. Dekontaminierungsvorrichtung nach irgendeinem der Ansprüche 1 oder 2, ***dadurch gekennzeichnet, dass*** die Hochdruckeinheit (2), die den Hochdruckreinigungskopf (1) speist, einen Druck zwischen 300 und 7.000 Bar abgeben kann, mit einem Wasserdurchsatz zwischen 4 und 200 L/min.

4. Dekontaminierungsvorrichtung nach irgendeinem der Ansprüche 1 bis 3 ***dadurch gekennzeichnet, dass*** der Hochdruckreinigungskopf (1) auf einem mobilen Schlitten (17) montiert ist, der entlang eines Querträgers (18) eines Rahmens (19) verschoben werden kann, dieser Querträger (18) kann entlang der Längsträger (20) dieses Rahmens (19) verschoben werden.

5. Dekontaminierungsvorrichtung nach Anspruch 4, **dadurch gekennzeichnet, dass** der Rahmen (19) Mittel zur Befestigung dieses Rahmens (19) an einer Wand, einer Decke, auf dem Boden oder ähnlichem umfasst

6. Dekontaminierungsvorrichtung nach Anspruch 5, ***dadurch gekennzeichnet, dass*** der Rahmen (19) auf einem Fahrgestell (100) montiert ist, das mit Rollen (101) versehen ist.

7. Dekontaminierungsvorrichtung nach irgendeinem der Ansprüche 4 bis 6 ***dadurch gekennzeichnet, dass*** der mobile Schlitten (17) aus der Ferne mit einer Fernsteuerung gesteuert werden kann.

8. Dekontaminierungsvorrichtung nach irgendeinem der Ansprüche 1 bis 7 ***dadurch gekennzeichnet, dass*** die Filterpresse (7) aus mindestens einem Rahmen (70), ausgerüstet mit zwei Rädern (71) und einer Greifvorrichtung (72), um den Transport zu erleichtern, besteht, einem Druckluftkompressor (73), fest mit dem Rahmen (72) verbunden, einer durch die Druckluft des Druckluftkompressors (72) angetriebenen Umwälzpumpe (74) und einer Filter- und Presseinheit (75).

9. Dekontaminierungsvorrichtung nach Anspruch 8, ***dadurch gekennzeichnet, dass*** dieser Rahmen (70), auf einem im Wesentlichen U-förmigen Schlitten (77) montiert ist und mit vier in allen Richtungen beweglichen Rädern (78), ausgerüstet ist.

10. Dekontaminierungsvorrichtung nach irgendeinem der Ansprüche 8 bis 9, ***dadurch gekennzeichnet, dass*** diese Filter- und Presseinheit (75) eine obere Platte (81) und eine Abschlussplatte (82) umfasst, die mit mindestens einer Verbindungsstange verbunden sind, dazwischen befindet sich ein Bauteil (83) aus Filterplatten (83a, 83b, 83c, 83d, 83e), mindestens eine Filterkammer (84), die zwischen den Filterplatten (83a, 83b, 83c, 83d, 83e) liegt, ein Filtertuch (85), dass in dieser Filterkammer (84) aufgespannt ist, eine Klemmvorrichtung, mit denen die Filterplatten (83a, 83b, 83c, 83d, 83e) in eine Betriebsposition gebracht werden, in der die Filterkammern (84) in dichter Art und Weise gegeneinander gepresst werden können, und die Filterplatten (83a, 83b, 83c, 83d, 83e) in eine Öffnungsposition gebracht werden können, in der die Filterkammern (84) geöffnet werden können, um die Presskuchen aus toxischen Produkten und Trägerrückständen zu entnehmen, ein abnehmbares Distanzstück (86), eine Druckplatte (87) und eine Klemmvorrichtung in Form eines Pneumatikkissens (88) das vom Kompressor (73) gespeist wird.

11. Dekontaminierungsvorrichtung nach Anspruch 10, ***dadurch gekennzeichnet, dass*** das Pneumatikkissen (88) vom Druckluftkompressor (73) über einen ersten Pneumatikkreislauf (89) mit Druckluft gespeist wird, der ein pneumatisches Steuerungsventil (90) enthält, und ***dadurch dass*** dieser Druckluftkompressor (73) zwei Druckluftauslässe (73a) und (73b) enthält, der Druckluftauslass (73a) versorgt den ersten Pneumatikkreislauf (89) und letztendlich das Pneumatikkissen (88) mit Druckluft und der zweite Druckluftausgang (73b) versorgt einen zweiten Pneumatikkreislauf (91) mit Druckluft, der die Umwälzpumpe (74) speist, um sie anzutreiben, das pneumatische Steuerungsventil (90) wird dabei durch den Druck des zweiten Pneumatikkreislaufs (91) angetrieben.

12. Dekontaminierungsvorrichtung nach irgendeinem der Ansprüche 1 bis 11 ***dadurch gekennzeichnet, dass*** die Hochdruckeinheit (2), die den Hochdruckreinigungskopf speist, auf einem mobilen Fahrgestell montiert ist, um den Transport zu erleichtern.

13. Dekontaminierungsvorrichtung nach irgendeinem der Ansprüche 1 bis 12 ***dadurch gekennzeichnet, dass*** sie mindestens einen Membranfilter (600) enthält, zur Behandlung des mit toxischen Produkten und Trägerrückständen belasteten Wassers, dass im Behälter (6) gesammelt wird, dieser Membranfilter (600) stellt einen ersten Auslass für stärker belastetes Schmutzwasser bereit, das vom ersten Filtersystem (7) behandelt werden kann und einen zweiten Auslass für gefiltertes Wasser, der mit dem Abwassernetz und/oder der Hochdruckeinheit (2) verbunden werden kann.

14. Verfahren zur Dekontaminierung von Oberflächen mit einem oder mehreren toxischen Stoffen, das aus mindestens den folgenden Schritten besteht:
a) Entfernung einer die toxischen Produkte auf einem Untergrund enthaltenden Schicht mittels mindestens eines Hochdruckreinigungskopfes (1), der in einem geschlossenen, festgelegten Volumen einen Hochdruck-Wasserstrahl spritzt,
b) Ansaugung der Mischung aus Wasser, toxischen Produkten und Trägerrückständen innerhalb des geschlossenen Volumens des Hochdruckreinigungskopfes (1) und Speicherung in einem Behälter (6),
c) Weiterleitung der im Behälter (6) gespeicherten Mischung aus Wasser, toxischen Produkten und Trägerrückständen in eine Filterpresse (7), um feuchte Presskochen aus toxischen Produkten und Trägerrückständen zu formen, wobei die Filterpresse (7) in der Lage ist, Teilchen von größer oder gleich 5 µm herauszufiltern und in einen Puffertank (8) weiterzuleiten.

15. Verfahren zur Dekontaminierung von Oberflächen mit einem oder mehreren toxischen Stoffen nach Anspruch 14, ***dadurch gekennzeichnet, dass*** es einen Schritt der Passage des Wassers aus dem Puffertank (8) durch mindestens einen Filter (11) enthält, wobei dieser Filter (11) in der Lage ist, Teilchen von größer oder gleich 1 µm herauszufiltern.

## Claims

1. Device for decontaminating surfaces comprising one or more toxic products comprising at least one hydroblasting head (1) comprising a closed volume for drawing a mixture of water, toxic products and residue, the hydroblasting head (1) being fed by a high pressure unit (2) and connected to a vacuum source (3) comprising a low pressure source (4) connected to a cyclone head (5) mounted on a container (6) which collects water containing toxic products and residues of the support, a first filtration system (7) consisting of a filtering press whose input is fed with water containing toxic products collected in said container (6) and whose output feeds a buffer tank (8) wherein the water from the first filtration (7) being used to filter particles less than or equal to 5 µm.

2. Decontamination device according to claim 1 ***characterised* in that** it comprises a second filtration system (9) consisting of a pump (10) provided with at least one filter (11), the filter (11) being able to filter particles larger than or equal to 1 µm.

3. Decontamination device according to any one claims 1 or 2 ***characterised* in that** the high pressure unit (2) feeding the hydroblasting head (1) is appropriate for delivering a pressure between 300 and 7000 bars with a water flow rate between 4 and 200 L/min.

4. Decontamination device according to any one claims 1 to 3 ***characterised* in that** the hydroblasting head (1) is mounted on a movable trolley (17) capable of moving along a crossarm (18) of a frame (19), the said crossarm(18) being adapted to move along the side-members (20) of the said frame (19).

5. Decontamination device according to claim 4 ***characterised* in that** the frame (19) includes means for fixing the said frame (19) on a wall or a ceiling or a floor or the like.

6. Decontamination device according to claim 5 ***characterised* in that** the frame (9) is mounted on a chassis (100) comprising wheels (101).

7. Decontamination device according to any one claims 4 to 6 ***characterised* in that** the movable trolley (17) can be remote-controlled using a remote control.

8. Decontamination device according to any one claims 1 to 7 ***characterised* in that** the filtering press (7) at least one chassis (70) provided with two wheels (71) and a handle bar (72) to facilitate its transport, an air compressor (73) attached to the chassis (72), a circulation pump (74) driven by the compressed air produced by the air compressor (72), and a filtration and pressing unit (75).

9. Decontamination device according to claim 8 ***characterised* in that** the said chassis (70) is mounted on a substantially U-shaped trolley (77) which comprises four multidirectional wheels (78) with brakes.

10. Decontamination device according to any one claims 8 or 9 ***characterised* in that** the said filtration and pressing unit (75) comprises an upper plate (81) and an end plate (82) that are connected by at least one connecting rod with the interposition of a set (83) of filtration plates (83a,83b,83c,83d,83e), at least one filtration chamber (84) extending between the filtration plates (83a,83b,83c,83d,83e), a filter cloth (85) extending into the said filter chamber (84), a clamping device adapted to bring the filter plates (83a,83b,83c,83d,83e) to an operating position wherein the filtration chambers (84) are pressed against each other tightly and release the filter plates (83a,83b,83c,83d,83e) in an open position wherein the filter chambers (84) can be opened to release the baled toxic products and support residue, a removable spacer plate (86), a pressure plate (87) and a clamping device in the form of a pneumatic cushion (88) that is powered by the compressor (73).

11. Decontamination device according to claim 10 ***characterised* in that** the pneumatic cushion (88) is supplied with air compressed by the air compressor (73) through a first pneumatic circuit (89) comprising a pneumatic control valve (90) and the said air compressor (73) comprises two compressed air outlets (73a) and (73b), the air outlet (73a) supplying compressed air to the first pneumatic circuit (89) and ultimately the pneumatic cushion (88) and the second compressed air outlet (73b) supplying compressed air to a second pneumatic circuit (91) that feeds the circulation pump (74) for driving it, the pneumatic control valve (90) being controlled by the pressure of the second pneumatic circuit (91).

12. Decontamination device according to any one claims 1 to 11 ***characterised* in that** the high pressure unit (2) feeding the hydroblasting head is mounted on a mobile chassis for ease of transport.

13. Decontamination device according to any one claims 1 to 12 ***characterised* in that** it comprises at least one membrane filter (600) for treating water containing toxic products and support residue collected in the container (6), the said membrane filter (600) providing a first outlet for water more contaminated with materials that can be treated by the first filtration system (7) and a second filtered water outlet which can be connected to the sewage system and/or the high pressure unit (2).

14. Method for decontamination of surfaces comprising one or more toxic products comprising:
a) removal of a layer consisting of toxic products on a support by means of at least one hydroblasting head (1) projecting, in a given closed volume, a high pressure jet,
b) suction of the water mixture, toxic products and support residue, inside the closed volume of the hydroblasting head (1), and storage in a container (6),
c) transfer of the water mixture, toxic products and support residue stored in the container (6) to a filtering press (7) to form wet bales of toxic products and support residue; the filtering press (7) being used to filter particles larger than or equal to 5 µm and transported to a buffer tank (8).

15. Method for decontamination of surfaces according to claim 14 ***characterised* in that** it comprises a step of passing the water from the buffer tank (8) through at least one filter (11), the filter being used to filter particles larger than or equal to 1 µm.
